(19) Europäisches Patentamt

European Patent Office

Office européen des brevets

(11) **EP 1 066 896 A2**

(12) **EUROPEAN PATENT APPLICATION**

(43) Date of publication:
**10.01.2001 Bulletin 2001/02**

(51) Int. Cl.⁷: **B21J 15/02**

(21) Application number: **00305390.7**

(22) Date of filing: **27.06.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **09.07.1999 US 349704**<br><br>(71) Applicant:<br>**LUCENT TECHNOLOGIES INC.**<br>**Murray Hill, New Jersey 07974-0636 (US)** | (72) Inventors:<br>• **Bell, Michael Ray**<br>  **Dallas, Texas 75219 (US)**<br>• **Jackson, Kevin Dexter**<br>  **Garland, Texas 75042 (US)**<br>• **Stevenson, Carmen M.**<br>  **Mesquitte, Texas 75150 (US)**<br><br>(74) Representative:<br>**Watts, Christopher Malcolm Kelway, Dr. et al**<br>**Lucent Technologies (UK) Ltd,**<br>**5 Mornington Road**<br>**Woodford Green Essex, IG8 0TU (GB)** |

(54) **Rotating joint assembly in sheet metal and method for producing same**

(57) A rotating joint assembly between two sheets of material is described along with a method for producing such an assembly. The rotating joint assembly has a first sheet of material with an extrusion formed therein. The extrusion is cylindrical in shape and has an inner diameter, an outer diameter, and a depth. A second sheet of material is joined to the first sheet of material by inserting the extrusion in the first sheet of material through an aperture formed in the second sheet of material. The aperture is sized slightly larger than the extrusion and the thickness of the second sheet of material is slightly less than the depth of the extrusion. The two sheets of material, once joined, may rotate relative to one another about the extrusion. The two sheets are secured together using a rivet, which is set through the center of the extrusion. The set rivet has a head and a flange which hold the two sheets of material together. Either the head or the flange can be adjacent to the second sheet of material so long as its diameter is greater than the diameter of the aperture through the second sheet of material. The rotating joint assembly works particularly well for sheet metal such as sheet steel or aluminum.

FIG. 1

EP 1 066 896 A2

**Description**

**TECHNICAL FIELD OF THE INVENTION**

The present invention relates to rotating joints formed in sheet metal. Specifically, the present invention is a rotating joint between two pieces of sheet metal that uses a rivet to secure the joint.

**BACKGROUND OF THE INVENTION**

It is often necessary or desirable for two pieces of joined sheet metal to rotate relative to one another, such as for a handle assembly where the handle can be rotated out of the way when not in use. A joint assembly is formed between the two pieces of sheet metal to allow them to rotate. Prior art joint assemblies usually involved screws, washers and nuts to secure the two pieces of joint metal and to allow them to rotate relative to each other. Using screws, however, added significant expense to creating a rotating joint in sheet metal, both due to the cost of materials as well as the added manufacturing complexities.

With screw based rotating joints, the joint must be tapped to accept the threaded, or thread forming screw and the screw must be threaded into the joint. Both processes add to the manufacturing complexity and result in increased manufacturing costs. Additionally, the screw itself must be precisely dimensioned, both in diameter as well as in length to accommodate the depth of the joint.

Accordingly, what is needed is an improved rotating joint in sheet metal and a method for producing such a joint.

**SUMMARY OF THE INVENTION**

The present invention provides a rotating joint in sheet metal in which two sheets of metal are joined in a rotating joint assembly using a rivet. The first sheet of metal in the rotating joint assembly has an extrusion formed in it, the extrusion having an inner diameter, an outer diameter, and a depth. The second sheet of metal has an aperture sized to accept the extrusion and with a thickness slightly less than the depth of the extrusion. A rivet is used to secure the sheets of metal together. The rivet, when set, extends through the extrusion and has a head at one end and a flange at the other. Either the head or the flange is adjacent to the second sheet of metal and has a diameter larger than the aperture, thereby preventing the two sheets of metal from separating and maintaining them in a rotatable relationship about the rotating joint assembly. A washer can be included between the first and second sheets of metal to provide a low-friction surface to allow the two sheets of metal to rotate more freely.

The present invention also provides for a method of producing a rotating joint assembly. The method involves producing an extrusion in a first sheet of metal, producing an aperture in a second sheet of metal, and then joining the first and second sheets of metal by inserting the extrusion through the aperture and securing the two sheets of metal using a rivet. The method can also include placing a low-friction washer between the two sheets of metal.

The foregoing has outlined, rather broadly, preferred and alternative features of the present invention so that those skilled in the art may better understand the detailed description of the invention that follows. Additional features of the invention will be described hereinafter that form the subject of the claims of the invention.

**BRIEF DESCRIPTION OF THE DRAWINGS**

For a more complete understanding of the present invention, reference is now made to the following descriptions taken in conjunction with the accompanying drawings, in which:

Figure 1 is an exploded perspective view showing a rotating joint in sheet metal in accordance with the principles of the present invention;
Figure 2 is a cutaway view of the rotating sheet metal members;
Figure 3 is a cutaway view showing a rotating joint in accordance with the present invention;
Figures 4a, b, c, and d are a perspective view, a top view, side view, and a bottom view, respectively, of a rotating joint in accordance with the present invention; and
Figure 5 is a perspective view of an alternative embodiment of a rotating joint according to the present invention.

**DETAILED DESCRIPTION OF THE DRAWINGS**

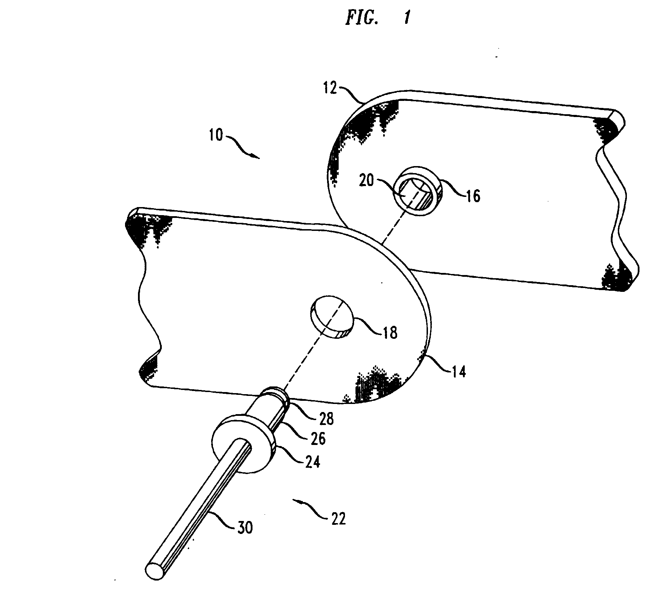

Referring now to Figure 1, a rotating joint 10 in accordance with the principles of the present invention is shown. Rotating joint 10 is formed between first sheet 12 and second sheet 14. First and second sheets 12 and 14 are formed from any sheet metal or other extrudable material that can be punched and extruded. Common examples of suitable sheet metal would be steel and aluminum. First and second sheets 12 and 14 can also be of any shape or size as long as they are intended to rotate relative to one another.

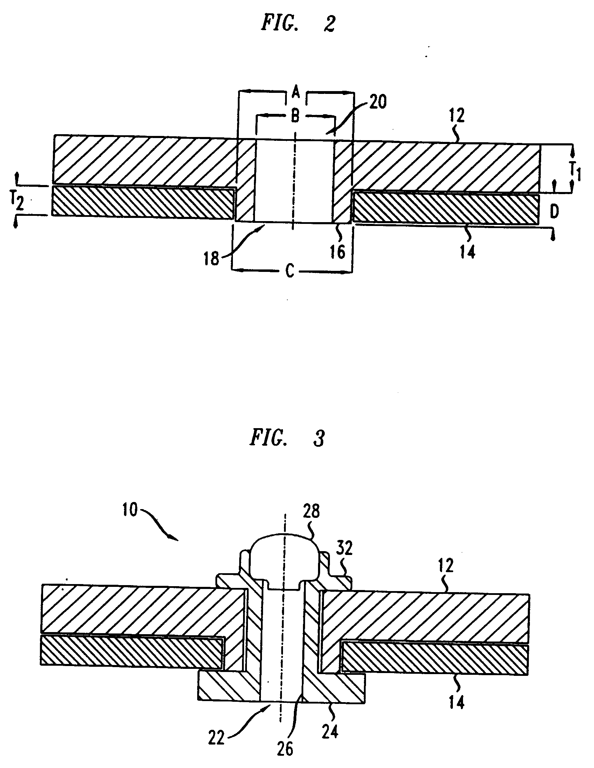

First sheet 12 includes extrusion 16. Extrusion 16 is formed in an essentially cylindrical shape with a prescribed depth and diameter as will be described with reference to Figure 2. Extrusion 16 is formed with extrusion aperture 20, which extends through the entire depth of extrusion 16. Second sheet 14 includes aperture 18. Aperture 18 is of a prescribed diameter and accepts extrusion 16, which is inserted therethrough.

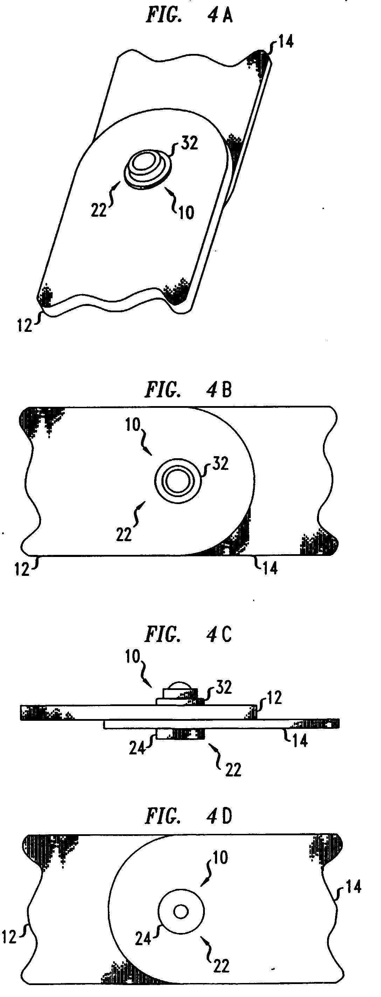

Rivet 22 is inserted into extrusion aperture 20 and acts to hold first and second sheets 12 and 14 together as will be described with reference to Figure 3. Rivet 22 is a common rivet of any suitable material, and can be a pop rivet (or blind rivet) of the hollow-core or solid-core variety, or any other type of rivet that can be set at a range of depths, as described herein. Rivet 22 is formed by the integral head 24 and body 26. Mandrel 28 is connected to stem 30, which passes through the interior of body 26. As with any rivet, rivet 22 is set by pulling stem 30 through body 26, thereby causing mandrel 28 to act with the opposing surface, here first sheet 12, to deform the end of body 26 opposite head 24 into a flange. Stem 30 breaks away leaving the set rivet, and mandrel 28 can either remain as part of rivet 22 or can fall away depending on the style of rivet used.

Referring now to Figure 2, the relationship between first and second sheets 12 and 14 when aligned through extrusion 16 is shown. As stated above, extrusion 16 is inserted through aperture 18 to join first and second sheets 12 and 14 in their rotatable relationship. Extrusion 16 has an inner diameter B and an outer diameter A. Aperture 18 has a diameter C, which is dimensioned to be slightly larger than the outer diameter of extrusion 16 allowing extrusion 16 to be inserted through aperture 18. Inner diameter B of extrusion 16, which forms extrusion aperture 20, is chosen to be slightly larger than the diameter of the rivet used.

Extrusion 16 is formed to depth D, which is chosen to be slightly larger than the thickness $T_2$ of second sheet 14. A difference between the thickness of extrusion 16 and thickness $T_2$ of second sheet 14 of from 0.005 to 0.015 inches would provide a nominal clearance to allow rotation. Thickness $T_1$ of first sheet 12 is determined by dimensions of extrusion 16. Outer diameter A of extrusion 16 is a function of inner diameter B and thickness $T_1$ ($A=f(B,T_1)$) as well as the material used. A sufficient thickness $T_1$ must be chosen to ensure that the material of first sheet 12 can be formed into extrusion 16 with the desired outer diameter A.

Figure 3 shows a cutaway view of assembled rotating joint 10. Extrusion 16 of first sheet 12 is inserted into aperture 18 from second sheet 14, thereby forming rotating joint 10. First and second sheets 12 and 14 are held in the appropriate rotatable relationship by rivet 22, which is inserted through extrusion 16 and set to form flange 32. When set by removing stem 30, shown in Figure 1, mandrel 28 deforms the portion of body 26 extending through first sheet 12 to form flange 32. First and second sheets 12 and 14 are then held in place between head 24 and flange 32 of rivet 22.

Head 24 of rivet 22 must be chosen to have a diameter greater than diameter C of aperture 18, shown in Figure 2. This prevents second sheet 14 from sliding off extrusion 16 of first sheet 12. It can be readily seen from one skilled in the art that rivet 22 could easily be inserted through extrusion 16 in the reverse direction if, when set, flange 32 is of a greater diameter than diameter C of aperture 18.

Referring now to Figures 4a, b, c, and d, rotating joint 10 is shown in a variety of views. In each of Figures 4a-d, first sheet 12 and second sheet 14 are shown in a rotatable relationship about rotating joint 10. First and second sheets 12 and 14 are held in their rotatable relationship between head 24 and flange 32 of rivet 22.

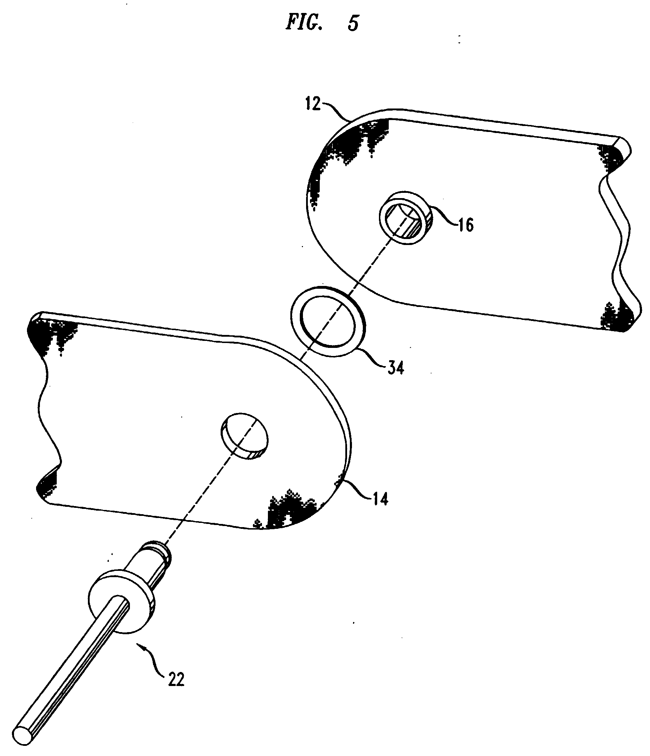

Figure 5 shows exploded view of an alternate embodiment of rotating joint 10. Rotating joint 10 is formed in the same manner as described above with extrusion 16 being formed in first sheet 12 and inserted into aperture 18 formed in second sheet 14. Rivet 22 is again used to secure first and second sheets 12 and 14 in a rotatable relationship about rotating joint 10. Washer 34 is inserted over extrusion 16 and lies between first sheet 12 and second sheet 14 to reduce the friction between the sheets during rotation. Washer 34 presents a low friction surface to facilitate smooth rotation and can be formed from any material having a low coefficient of friction with sheet steel, or with whatever metal or material from which first and second sheets 12 and 14 are formed. Such materials for sheet steel would include, but are not limited to, teflon®, nylon, and delron. Other materials can be chosen for other types of sheet metals.

The only adjustment that must be made in the design of rotating joint 10 to accommodate washer 34 is to insure that extrusion 16 has the proper depth to accommodate the additional thickness of the washer. As can be seen, the washer thickness adds to the thickness of second sheet 14, so care must be taken to maintain the relationships described with respect to Figure 2.

All of the elements shown in Figure 1-5 are commonly available. Although particular references have been made to specific materials, those skilled in the art should understand that rotating joint 10 could be formed from a multitude of materials, all of which are well within the broad scope of the present invention. Additionally, the term rivet, as used herein, is meant to refer to any rivet that does not need to be precisely dimensioned according to the depth of the materials to be joined, but rather can be set to join materials over a range of depths. Further, while the rotating joint has been described and shown with the extrusion in a particular sheet and the rivet inserted in a particular direction, these are for illustrative purposes and could easily be reversed without departing from the broad scope of the present invention.

Although the present invention has been described in detail, those skilled in the art should understand that they can make various changes, substitutions and alterations herein without departing from the scope of the invention in its broadest form.

**Claims**

1.  A rotating joint formed between a first and second sheet of material comprising:

    an extrusion formed in the first sheet of material, the extrusion including an extrusion aperture;
    an aperture formed in the second sheet of material and sized to receive the extrusion; and
    a rivet inserted through the extrusion aperture and set such that the first and second sheet of material are held in a rotatable relationship between a head and a flange of the rivet.

2.  The rotating joint of Claim 1 wherein the head of the rivet is adjacent to the second sheet of material and is larger than the aperture, thereby preventing the first and second sheets of material from separating.

3.  The rotating joint of Claim 1 wherein the flange of the rivet is adjacent to the second sheet of material and is larger than the aperture, thereby preventing the first and second sheets of material from separating.

4.  The rotating joint of Claim 1 wherein the first and second sheets of material are sheet metal.

5.  The rotating joint of Claim 4 wherein the sheet metal is steel.

6.  The rotating joint of Claim 4 wherein the sheet metal is aluminum.

7.  The rotating joint of Claim 1 further comprising a washer disposed around the extrusion and between the first and second sheets of material.

8.  A rotating joint comprising:

    a first sheet of metal having an extrusion formed therein, the extrusion forming a hollow cylinder through the first sheet of metal;
    a second sheet of metal having an aperture sized to accept the extrusion of the first sheet of metal; and
    a rivet securing the second sheet of metal to the first sheet of metal, the rivet extending through the extrusion and a head at one end and a flange at the opposite end, the head and the flange acting to prevent the first and second sheets of metal from separating.

FIG. 1

## FIG. 2

## FIG. 3

**FIG. 4 A**

**FIG. 4 B**

**FIG. 4 C**

**FIG. 4 D**

FIG. 5